# EUROPEAN PATENT APPLICATION

(11) **EP 4 566 436 A1**
(43) Date of publication of application: **11.06.2025**
(21) Application number: 24213869.1
(22) Date of filing: 19.11.2024
(51) Int. Cl.: A01D 34/00

(54) **AN ENHANCED ROBOTIC WORK TOOL BODY**

(30) Priority: 07.12.2023 SE 2351402
(71) Applicant: Husqvarna AB, 561 82 Huskvarna (SE)
(72) Inventor: Holmberg, Oscar, Huskvarna (SE); Elgedin, Johan, Huskvarna (SE); Sigurdson, Tor, Huskvarna (SE); Widlund, Marcin, Huskvarna (SE)

(57) **Abstract**

The present disclosure relates to a robotic work tool (100) comprising a main body part (140), a plurality of wheels (130, 131), a control unit (110) and at least one electric motor (150), where at least one wheel (131) is drivably connected to at least one electric motor (150). The main body part (140) comprises a lower side (140a) that is adapted to face ground (G) during normal operation of the robotic work tool (100), and an upper side (140b) that is opposite the lower side (140a) and is adapted to face away from ground (G) during normal operation of the robotic work tool (100). The upper side (140b) comprises at least three support protrusions (120, 121, 122) that mainly extend from the upper side (140b) away from ground (G) during normal operation of the robotic work tool (100), where each support protrusion (120, 121, 122) comprises a corresponding top surface (123, 124, 125), where a plane (P) that touches all top surfaces (123, 124, 125) stays clear of all other parts of the robotic work tool (100).

## Description

### TECHNICAL FIELD

The present disclosure relates to a robotic work tool comprising a main body part, a plurality of wheels, a control unit and at least one electric motor. At least one wheel is drivably connected to at least one electric motor. The main body part comprises a lower side that is adapted to face ground during normal operation of the robotic work tool, and an upper side that is opposite the lower side and is adapted to face away from ground during normal operation of the robotic work tool.

### BACKGROUND

Robotic work tools such as for example robotic lawnmowers are becoming increasingly more popular. In a typical deployment a work area, such as a garden, the work area is enclosed by a boundary wire with the purpose of keeping the robotic lawnmower inside the work area. An electric control signal may be transmitted through the boundary wire thereby generating an (electro-) magnetic field emanating from the boundary wire. The robotic lawnmower is typically arranged with one or more sensors adapted to sense the control signal.

Alternatively, or as a supplement, the robotic lawnmower can be equipped with a navigation system that is adapted for satellite navigation as well as navigation by means of a local base station, the boundary is then virtual.

The robotic lawnmower is adapted to cut grass on a user's lawn automatically and can be charged automatically without intervention of the user, and does not need to be manually managed after being set once.

Users and service personnel regularly have to subject robotic lawnmowers, and other types of robotic work tools such as for example robotic vacuum cleaners, to service and cleaning, and it is desired that this can be performed in an efficient manner, while sensitive parts are protected from shock and damaging forces.

It is therefore desired to provide a robotic work tool that is adapted for easy service and cleaning while sensitive parts are provided protection from shock and damaging forces.

### SUMMARY

The object of the present disclosure is to provide a robotic work tool that is adapted for easy service and cleaning while sensitive parts are provided protection from shock and damaging forces.

This object is achieved by means of robotic work tool comprising a main body part, a plurality of wheels, a control unit and at least one electric motor, where at least one wheel is drivably connected to at least one electric motor. The main body part comprises a lower side that is adapted to face ground during normal operation of the robotic work tool, and an upper side that is opposite the lower side and is adapted to face away from ground during normal operation of the robotic work tool. The upper side comprises at least three support protrusions that mainly extend from the upper side away from ground during normal operation of the robotic work tool. Each support protrusion comprises a corresponding top surface, where a plane that touches all top surfaces stays clear of all other parts of the robotic work tool.

In this manner, the robotic lawnmower can easily be placed upside-down as shown in, for example for service or cleaning purposes, without risking sensitive parts being damaged. The support protrusions ensures that such sensitive parts do not need to be in contact with the ground when the robotic lawnmower is placed upside-down provided that the ground is sufficiently planar.

According to some aspects, the robotic work tool comprises at least one sensor device that is mounted to the upper side. For example, the sensor device comprises at least one of an antenna device, a navigation sensor arrangement and an environmental detection sensor arrangement. For example, the environmental detection sensor arrangement comprises at least one of a camera device, a Lidar device, a radar device and an ultrasonic transceiver.

The sensor device may thus comprise many different types of devices and arrangements that benefit from the position on the upper side.

According to some aspects, the environmental detection sensor arrangement comprises a camera device and/or a Lidar device that is adapted to provide an omni-directional view. In this manner, advantage is taken of the position on the upper side.

According to some aspects, each support protrusion is at least partly formed integrally with the main body part. Alternatively, each support protrusion is a separate part that is attached to the main body part by means of a releasable snap-fit attachment.

In this manner, the support protrusion can either be easily formed when the main body part is formed, or be formed as separate items that are easily replaceable.

According to some aspects, each top surface is formed in a separate material that is different from the material in which the corresponding support protrusion is formed. According to some aspects, the separate material is replaceable. In this manner, the separate material can be replaced when worn which in particular is advantageous in the case the support protrusions are formed integrally with the main body part.

According to some aspects, the robotic work tool comprises a chassis, where the main body part is movably attached to the chassis. In this manner, in case of a collision, the movement of the main body part relative the chassis can absorb some of the collision shock.

According to some aspects, the robotic work tool comprises a collision detection sensor that is adapted to detect relative movements between the main body part and to the chassis. According to some aspects, the collision detection sensor is fixed mounted to the chassis. In this manner, a collision is easily and reliably detected.

According to some aspects, there are three support protrusion that are arranged in a triangular configuration. According to some further aspects, the support protrusions are positioned along a smallest circumference that circumvents the sensor device. In this manner, a stable support is provided when the robotic work tool is placed upside-down while the sensor device is protected by all support protrusions.

According to some aspects, at least one support protrusion is positioned in front of the sensor device in the forward travelling direction. This is beneficial in case the robotic work tool approaches an elevated obstacle that might hit the sensor device and afflict damage to the sensor device. The sensor device is then protected by the support protrusion, or by those support protrusions, that are positioned in front of the sensor device when the robotic work tool moves in the forward travelling direction. Other support protrusions might be positioned such that the sensor device is protected from collision with elevated objects when the robotic work tool moves in other travelling directions.

According to some aspects, the robotic work tool is an outdoor robotic work tool, and according to some aspects, the robotic work tool is a robotic lawnmower. For example, the robotic lawnmower comprises a grass cutting device in the form of a rotatable disc that is driven by a cutter motor. This means that the present disclosure is applicable for many types of robotic work tools, including robotic lawnmowers.

### BRIEF DESCRIPTION OF THE DRAWINGS

The present disclosure will now be described more in detail with reference to the appended drawings, where:
- Figure 1: shows a perspective side view of a robotic lawnmower;
- Figure 2: shows a schematic overview of a sensor device;
- Figure 3: shows a schematic overview of the robotic lawnmower;
- Figure 4: schematically illustrates a side view of the robotic lawnmower standing on its wheels;
- Figure 5: schematically illustrates a side view of the robotic lawnmower standing upside-down;
- Figure 6: schematically illustrates a perspective bottom view of the robotic lawnmower standing upside-down;
- Figure 7: shows a perspective side view of a support protrusion; and
- Figure 8: shows a perspective side view of a releasable support protrusion and a part of the main body part.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

Generally, the present disclosure relates to a robotic work tool 100 that can be adapted for indoor use such as robotic vacuum cleaner or adapted for outdoor use such as collecting leaves or golf balls, or as a robotic lawnmower.

In the following, the present disclosure will be described for a robotic lawnmower.

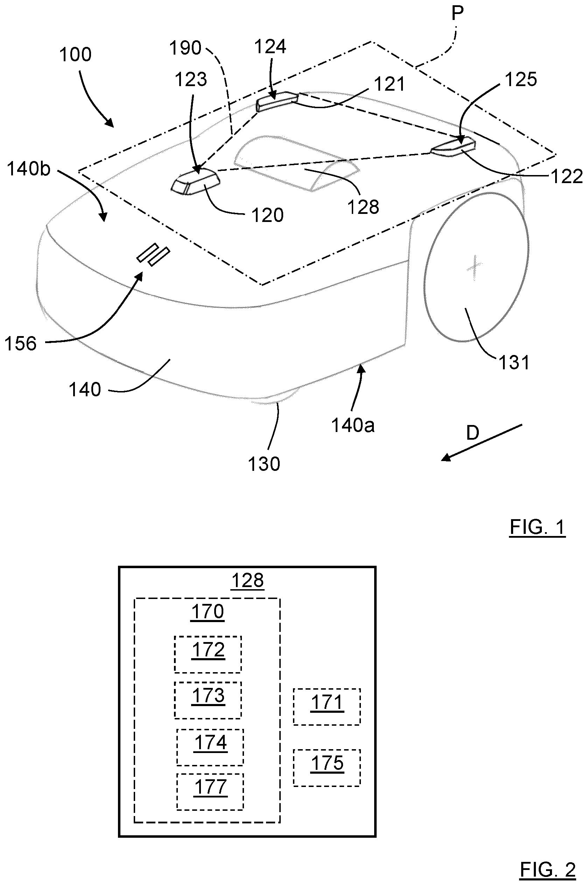

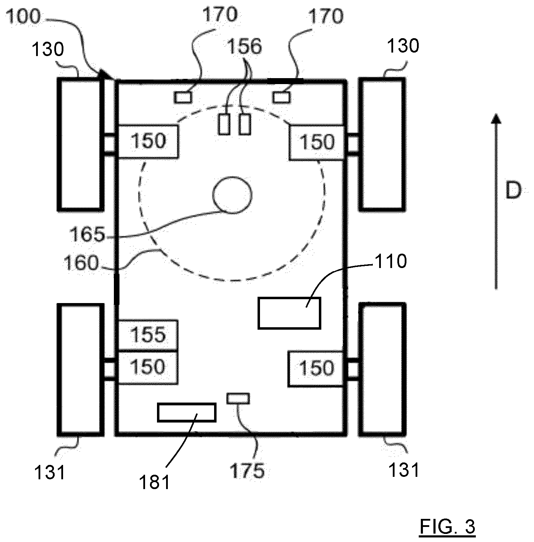

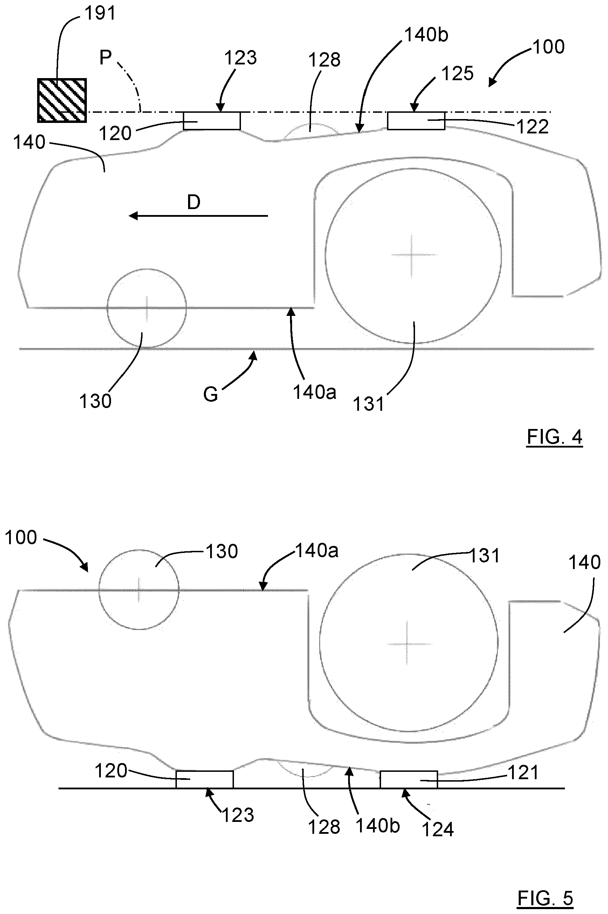

Figure 1 shows a perspective view of a robotic lawnmower 100, Figure 3 shows a schematic overview of the robotic lawnmower 100 and Figure 4 shows a side view of the robotic lawnmower 100. The robotic lawnmower 100 is adapted for a forward travelling direction D, has a body 140 and a plurality of wheels 130, 131; in this example the robotic lawnmower 100 has four wheels, two front wheels 130 and two rear wheels 131. The robotic lawnmower 100 comprises a control unit 110 and at least one electric motor 150, where at least one wheel 130, 131 is drivably connected to at least one electric motor 150. It should be noted that even if the description herein is focused on electric motors, combustion engines may alternatively be used in combination with an electric motor arrangement. The robotic lawnmower 100 may be a multi-chassis type or a mono-chassis type. A multi-chassis type comprises more than one body parts that are movable with respect to one another. A mono-chassis type comprises only one main body part.

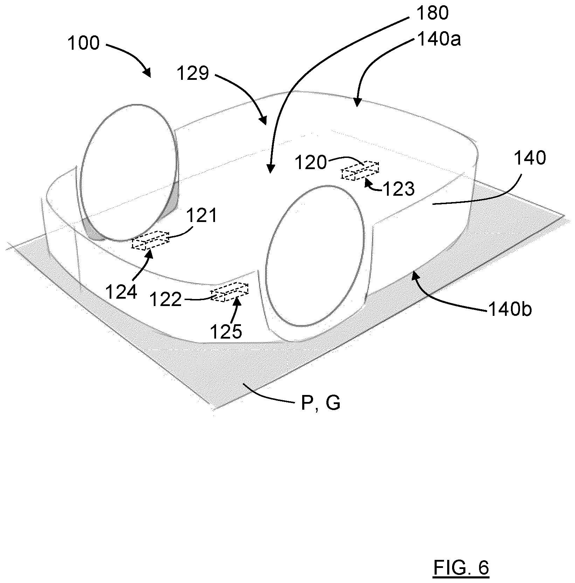

The main body part 140 comprises a lower side 140a that is adapted to face ground G during normal operation of the robotic lawnmower 100, and an upper side 140b that is opposite the lower side 140a and is adapted to face away from ground G during normal operation of the robotic lawnmower 100. According to some aspects, the robotic lawnmower 100 comprises an underneath 129 (only schematically indicated in Figure 6) that is accessible via the lower side 140a. According to some aspects, the robotic lawnmower tool 100 comprises a chassis 180 (only schematically indicated in Figure 6), where the main body part 140 is movably attached to the chassis 180. In this manner, in case of a collision, the movement of the main body part 140 relative the chassis 180 can absorb some of the collision shock.

According to some aspects, the wheels 130, 131 extend towards the ground G during normal operation of the robotic lawnmower 100. In this context, normal operation of the robotic lawnmower 100 means normal running of the robotic lawnmower 100 on the ground G, in Figure 4 indicated with an ideal horizontal ground level G. In reality, the ground G of course normally follows a more or less changing form with different inclinations.

The robotic lawnmower 100 also comprises a grass cutting device in the form of a rotatable disc 160 that is driven by a cutter motor 165. According to some aspects, the rotatable disc 160 comprises pivoting knives 161, 162, 163, the pivoting knives 161, 162, 163 for example being in the form of a plurality of separate rotating blades 161, 162, 163.

The robotic lawnmower 100 also has at least one rechargeable electric power source such as a battery 155 for providing power to the electric motor arrangement 150 and/or the cutter motor 165. Such a battery can be charged via charging skids 156 at a charging station in a well-known manner.

According to the present disclosure, the upper side 140b comprises at least three support protrusions 120, 121, 122 that mainly extend from the upper side 140b away from ground G during normal operation of the robotic work tool 100, where each support protrusion 120, 121, 122 comprises a corresponding top surface 123, 124, 125, where a plane P that touches all top surfaces 123, 124, 125 stays clear of all other parts of the robotic work tool 100.

In this manner, the robotic lawnmower 100 can easily be placed upside-down as shown in Figure 5 and Figure 6, for example for service or cleaning purposes, without risking sensitive parts being damaged. The support protrusions 120, 121, 122 ensures that such sensitive parts do not need to be in contact with the ground G when the robotic lawnmower 100 is placed upside-down provided that the ground G is sufficiently planar. When the robotic lawnmower 100 is placed upside-down, the upper side 140b faces the ground G instead of the lower side 140a.

With reference also to Figure 2 that shows a schematic overview of a sensor device 128, according to some aspects, the robotic lawnmower 100 comprises at least one sensor device 128 that is mounted to the upper side 140b. This is an example of a sensitive part that protrudes away from the upper side 140b and is protected from damage by the support protrusions 120, 121, 122.

According to some aspects, the at least one sensor device 128 comprises at least one of an antenna device 171, a navigation sensor arrangement 175 and an environmental detection sensor arrangement 170. According to some aspects, the antenna device is comprised in the navigation sensor arrangement 175 that for example may be adapted for satellite navigation by means of GPS (Global Positioning System) or some other Global Navigation Satellite System (GNSS) system, for example using Real Time Kinematic (RTK). In addition to this, the navigation system is adapted for navigation by means of a local base station that can be housed in a charging station and provide a navigation signal that further increases the navigation accuracy.

According to some aspects, the environmental detection sensor arrangement 170 comprises at least one of a camera device 172, a Lidar device 173, a radar device 174 and an ultrasonic transceiver 177.

The sensor device 128 may thus comprise many different types of devices and arrangements that benefit from the position on the upper side 140b.

According to some aspects, the environmental detection sensor arrangement 170 comprises a camera device 172 and/or a Lidar device 173 that is adapted to provide an omni-directional view. In this manner, advantage is taken of the position on the upper side.

All the above different types of devices and arrangements that may be comprised in the sensor device 128 are protected by the support protrusions 120, 121, 122 when the robotic lawnmower 100 is placed upside-down, where the sensor device 128 otherwise would have been in contact with the ground G and subject to shock and pressure forces that might damage the sensor device 128.

Furthermore, as illustrated in Figure 4, in case the robotic lawnmower 100 approaches an elevated obstacle 191 that might hit the sensor device 128 and afflict damage to the sensor device 128, the sensor device 128 is protected by a first support protrusion 120 that is positioned in front of the sensor device 128 when the robotic lawnmower 100 moves in the forward travelling direction D. A second support protrusion 121 and a third support protrusion 122 might be positioned such that the sensor device 128 is protected from collision with such objects 191 when the robotic lawnmower 100 moves in other travelling directions.

In this example, the elevated obstacle 191 that intersects the plane P hits the first support protrusion 120 before reaching the sensor device 128.

According to some aspects, the robotic lawnmower tool 100 comprises a collision detection sensor 181 that is adapted to detect relative movements between the main body part 140 and to the chassis 180. According to some further aspects, the collision detection sensor 181 is fixed mounted to the chassis 180. This means that when an obstacle such as the elevated obstacle 191 in the example above hits the first support protrusion 120, the main body part 140 is displaced relative the chassis 180, and this displacement is detected by the collision detection sensor 181, enabling the control unit 110 to take appropriate action, for example controlling the robotic lawnmower 100 to stop and reverse its travelling direction for a certain time or distance. A collision detection sensor 181 may for example comprise a magnet and a Hall sensor where the Hall sensor detects changes in the magnet's magnetic field in a previously well-known manner. Alternatively, or additionally, the collision detection sensor 181 may comprise a wheel motor current detector that detects changes in the wheel motor currents, indicating that a collision has occurred.

According to some aspects, there are three support protrusion that are arranged in a triangular configuration.

According to some aspects, the support protrusions 120, 121, 122 are positioned along a smallest circumference that circumvents the sensor device 128.

In this manner, a stable support is provided when the robotic lawnmower 100 is placed upside-down while the sensor device 128 is protected by all support protrusions 120, 121, 122.

According to some further aspects, at least one support protrusion 120 is positioned in front of the sensor device 128 in the forward travelling direction D.

Generally, the present disclosure relates to a robotic work tool 100 comprising a main body part 140, a plurality of wheels 130, 131, a control unit 110 and at least one electric motor 150, where at least one wheel 131 is drivably connected to at least one electric motor 150. The main body part 140 comprises a lower side 140a that is adapted to face ground G during normal operation of the robotic work tool 100, and an upper side 140b that is opposite the lower side 140a and is adapted to face away from ground G during normal operation of the robotic work tool 100. The upper side 140b comprises at least three support protrusions 120, 121, 122 that mainly extend from the upper side 140b away from ground G during normal operation of the robotic work tool 100, where each support protrusion 120, 121, 122 comprises a corresponding top surface 123, 124, 125, where a plane P that touches all top surfaces 123, 124, 125 stays clear of all other parts of the robotic work tool 100.

The robotic work tool 100 may be any type of robotic work tool as discussed above, according to some aspects the robotic work tool is a robotic lawnmower 100 as described in the examples above.

The present disclosure is not limited to the examples provided above, but may vary within the scope of the appended claims. For example, each support protrusion 120, 121, 122 is at least partly formed integrally with the main body part 140.

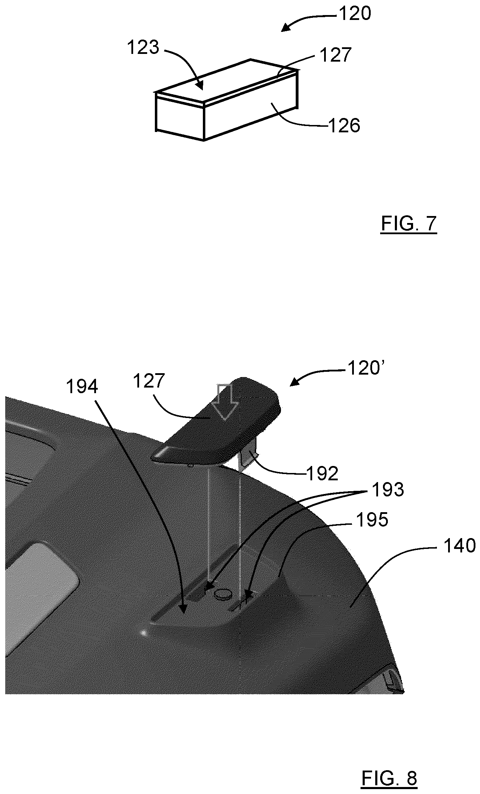

According to some aspects, with reference to Figure 7, each top surface 123, 124, 125 is formed in a separate material 127 that is different from a base material 126 in which the corresponding support protrusion 120, 121, 122 is formed. According to some aspects, the separate material 127 is replaceable. In this manner, the separate material 127 can be replaced when worn, which in particular is advantageous in the case the support protrusions 120, 121, 122 are formed integrally with the main body part 140.

According to some aspects, with reference to Figure 8, each support protrusion 120' is a separate part that is attached to the main body part 140 by means of a releasable snap-fit attachment. This means that the support protrusions 120, 121, 122 and can be easily replaced when worn or broken. As illustrated in Figure 8, there is a support protrusion 120' that comprises a separate material 127' that is a softer material than base material in which the rest of the support protrusion 120' is formed. Here the base material comprises resilient hooks 192 that are adapted to engage receiving apertures 193 in the main body part 140 to achieve a releasable snap-fit. The support protrusion 120' is attached to a seat the comprises a contact surface and 194 and a surrounding wall 195 that is adapted to circumvent and support the mounted support protrusion 120'. The separate material 127' may be adapted to be press-fitted towards the surrounding wall 195 such that dirt and moisture is prevented from entering.

## Claims

1. A robotic work tool (100) comprising a main body part (140), a plurality of wheels (130, 131), a control unit (110) and at least one electric motor (150), where at least one wheel (131) is drivably connected to at least one electric motor (150), where the main body part (140) comprises a lower side (140a) that is adapted to face ground (G) during normal operation of the robotic work tool (100), and an upper side (140b) that is opposite the lower side (140a) and is adapted to face away from ground (G) during normal operation of the robotic work tool (100), wherein the upper side (140b) comprises at least three support protrusions (120, 121, 122) that mainly extend from the upper side (140b) away from ground (G) during normal operation of the robotic work tool (100), where each support protrusion (120, 121, 122) comprises a corresponding top surface (123, 124, 125), where a plane (P) that touches all top surfaces (123, 124, 125) stays clear of all other parts of the robotic work tool (100).

2. The robotic work tool (100) according to claim 1, wherein the robotic work tool (100) comprises at least one sensor device (128) that is mounted to the upper side (140b).

3. The robotic work tool (100) according to claim 2, wherein the at least one sensor device (128) comprises at least one of an antenna device (171), a navigation sensor arrangement (175) and an environmental detection sensor arrangement (170).

4. The robotic work tool (100) according to claim 2, wherein the environmental detection sensor arrangement (170) comprises at least one of a camera device (172), a Lidar device (173), a radar device (174) and an ultrasonic transceiver (177).

5. The robotic work tool (100) according to any one of the claims 3 or 4, wherein the environmental detection sensor arrangement (170) comprises a camera device (172) and/or a Lidar device (173) that is adapted to provide an omni-directional view.

6. The robotic work tool (100) according to any one of the previous claims, wherein the robotic work tool (100) comprises an underneath (129) that is accessible via the lower side (140a).

7. The robotic work tool (100) according to any one of the previous claims, wherein each support protrusion (120, 121, 122) at least partly is formed integrally with the main body part (140).

8. The robotic work tool (100) according to any one of the previous claims, wherein each support protrusion (120, 121, 122) is a separate part that is attached to the main body part (140) by means of a releasable snap-fit attachment.

9. The robotic work tool (100) according to any one of the previous claims, wherein each top surface (123, 124, 125) is formed in a separate material (127) that is different from the material (126) in which the corresponding support protrusion (120, 121, 122) is formed.

10. The robotic work tool (100) according to any one of the previous claims, wherein the robotic work tool (100) comprises a chassis (180), where the main body part (140) is movably attached to the chassis (180).

11. The robotic work tool (100) according to claim 10, wherein the robotic work tool (100) comprises a collision detection sensor (181) that is adapted to detect relative movements between the main body part (140) and to the chassis (180).

12. The robotic work tool (100) according to claim 11, wherein the collision detection sensor (181) is fixed mounted to the chassis (180).

13. The robotic work tool (100) according to any one of the previous claims, wherein there are three support protrusion (120, 121, 122) that are arranged in a triangular configuration (190).

14. The robotic work tool (100) according to any one of the previous claims, wherein the support protrusions (120, 121, 122) are positioned along a smallest circumference that circumvents the sensor device (128).

15. The robotic work tool (100) according to any one of the previous claims, wherein at least one support protrusion (120) is positioned in front of the sensor device (128) in the forward travelling direction (D).

16. The robotic work tool (100) according to any one of the previous claims, wherein the robotic work tool (100) is a robotic lawnmower (100).
